# EUROPEAN PATENT APPLICATION

(11) **EP 1 553 267 A1**
(43) Date of publication of application: **13.07.2005**
(21) Application number: 03756689.0
(22) Date of filing: 17.10.2003
(51) Int. Cl.: F01N 3/02, F02D 9/02

(54) **DEVICE AND METHOD FOR PURIFYING EXHAUST GAS FROM INDUSTRIAL VEHICLE ENGINE**

(30) Priority: 17.10.2002 JP 2002303436
(71) Applicant: Kabushiki Kaisha Toyota Jidoshokki, Kariya-shi, Aichi-ken 448-8671 (JP)
(72) Inventor: NAKAMURA, Masaya; c/o K. K. TOYOTA JIDOSHOKKI, Kariya-shi, Aichi 448-8671 (JP)
(74) Representative: Vollnhals, Aurel
(86) International application number: PCT/JP2003/013331
(87) International publication number: WO 2004/040101

(57) **Abstract**

An exhaust emission purifying apparatus 100 performs the purification process of the exhaust gas emitted from a diesel engine 10 of a forklift. The exhaust emission purifying apparatus 100 elevates the temperature of the exhaust gas for the purpose of reprocessing a collection section 14 on the predetermined temperature condition using a fuel injection adjustment section 20, an engine load adjustment section 30, and an air intake restriction adjustment section 40. Thereby the temperature of the exhaust gas is set at the predetermined temperature, while keeping low the engine speed and the engine load. This construction makes it possible to improve the fuel consumption in reprocessing the collection section 14.

## Description

### TECHNICAL FIELD

The present Invention relates to the technology for performing purifying processing of the exhaust gas emitted from an engine installed in an industrial vehicle, such as a forklift and the like.

### BACKGROUND ART

Relatively many particulates (particulate matter) whose major component is carbon, for instance, are included in the exhaust gas emitted from a diesel engine of a forklift. The particulates are a cause of worsening of visibility and are subject to regulations as air pollutants, therefore, reduction of such particulates has been desired. In this regard, a technology is presented such that an exhaust emission purifying apparatus to collect and remove particulates is installed downstream of a diesel engine, and such exhaust emission purifying apparatus is suitably controlled in accordance with the state of operation.

Conventionally, as the technology for reprocessing of an exhaust emission purifying apparatus, for example, the first and second technologies mentioned below are known. The first technology is such that the reprocessing of an exhaust emission purifying apparatus is performed while a vehicle is operated, that is, a continuous reprocessing type, which is disclosed in Japanese Laid-Open Patent Publication No. 1-318715. To describe in detail, an oxidation catalyst disposed in a section upstream of the filter transforms NO in the exhaust gas into NO₂, thereby the particulates accumulated at the filter are combusted utilizing the exhaust heat. On the other hand, in the second technology, as disclosed in Japanese Laid-Open Patent Publication No. 63-297722 for example, the load on the hydraulic pump driven by an engine is increased, when the amount of the particulates accumulated in the filter is more than a certain amount, in order to increase the engine output so that the temperature of exhaust gas is raised up to the combustion temperature of the particulates (e.g. combustion temperature of 600°C). Consequently, the particulates accumulated in the filter are combusted.

In the first technology wherein the particulates are combusted at a relatively low temperature utilizing NO₂ in the exhaust gas, since the amount of NO and NO₂ contained in the exhaust gas is small, it takes a longer time to reprocess an exhaust emission purifying apparatus compared to the second technology wherein the temperature of the exhaust gas is raised up to or higher than 600°C. Further, in the case of a forklift, an engine is often used in a state of low load or the length of time an engine is continuously used is often short, therefore, in such a case, the requisite condition for combustion by NO₂ can not easily be secured. Thus, the particulates continue to accumulate in the filter. For this reason, the first technology cannot be effectively used as the regeneration technology for a filter in a forklift. In view of this, it is possible to combine the first technology with the second technology. However, in this case, although compulsory reprocessing of the filter becomes possible, operation at high engine load and high engine speed is required, thereby lowering the fuel efficiency.

### DISCLOSURE OF THE INVENTION

The object of the present invention is to provide a technology for effectively reprocessing a collecting section that has collected particulates at a good fuel efficiency.

In order to achieve the object described above, the present invention provides an exhaust emission purifying apparatus described below. The exhaust emission purifying apparatus performs a purifying process of the exhaust gas emitted from an engine for an industrial vehicle. The exhaust emission purifying apparatus is equipped with a collection section, a detection section, a temperature adjustment mechanism, and a control section. The collection section collects the particulates in the exhaust gas emitted from an engine. The detection section detects the information in relation to the amount of the particulates collected at the collection section. A temperature adjustment mechanism adjusts the temperature of the exhaust gas that actuates the collection section to a predetermined target temperature in accordance with the temperature of combustion of the particulates. The control section controls the temperature adjustment mechanism based on the information detected by the detection section. The temperature adjustment mechanism comprises, at least, an injection amount adjustment section, an engine load adjustment section, and an air intake restriction adjustment section. The injection amount adjustment section adjusts the amount of fuel injection to the engine. The engine load adjustment section adjusts the load on the engine. The air intake restriction adjustment section performs the restriction adjusting of the amount of air intake to the engine.

The present invention also provides a method for purifying process of the exhaust gas emitted from an engine for an industrial vehicle. The method includes a step of collecting the particulates in the exhaust gas emitted from the engine, a step of detecting the information with respect to the amount of collected particulates, and a step of setting the temperature of the exhaust gas that effects the collected particulates to the predetermined target temperature in accordance with the temperature of combustion of such particulates by controlling the amount of fuel injection to the engine, an engine load, and the amount of air intake to the engine.

### BRIEF DESCRIPTION OF DRAWINGS

Fig. 1 is a schematic diagram showing the construction of an exhaust emission purifying apparatus according to a first embodiment of the present invention.
Fig. 2 is a flowchart showing a purifying process for exhaust emission.
Fig. 3 is a flowchart showing reprocessing.
Fig. 4 is a flowchart showing reprocessing according to a second embodiment.
Fig. 5 is a graph showing the relationship between the engine speed and the engine torque.

### BEST MODE FOR CARRYING OUT THE INVENTION

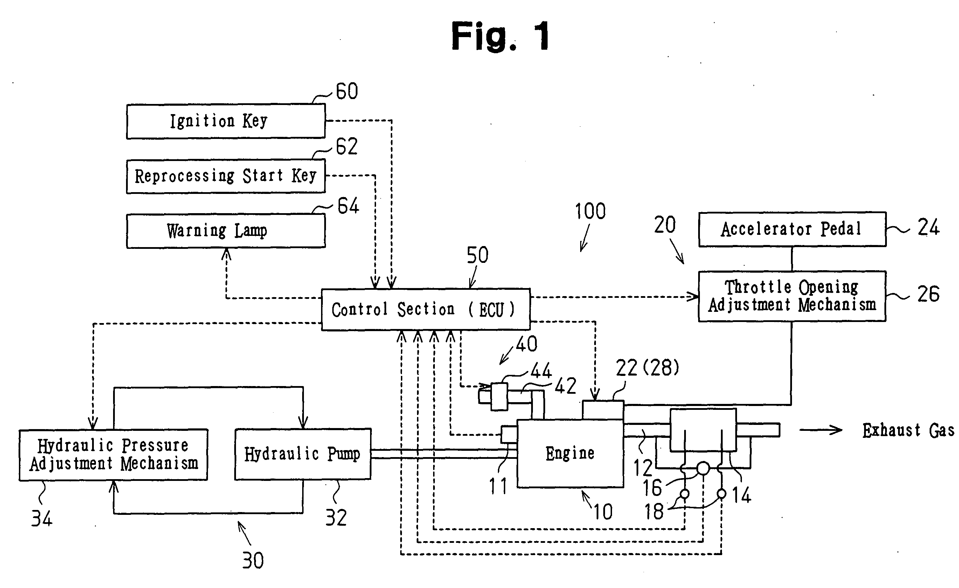

A first embodiment of the present invention will be described below referring to Figs. 1 to 3, and 5. It is to be noted that this embodiment is an explanation of an example of the present invention applied to the technology of a purifying process for the exhaust gas emitted from a diesel engine amounted on a forklift as an industrial vehicle.

As shown in Fig. 1, a diesel engine 10 as an engine for an industrial vehicle is equipped with an exhaust emission purifying apparatus 100. The exhaust emission purifying apparatus 100 performs a purifying process for the exhaust gas emitted from the diesel engine 10. The exhaust emission purifying apparatus 100 includes a collection section 14 disposed in an exhaust passage 12 in a section downstream of the diesel engine 10, an injection amount adjustment section 20, an engine load adjustment section 30, an air intake restriction adjustment section 40, and a control section 50. It is to be noted that the diesel engine 10 is equipped with an engine speed sensor 11 that detects the engine speed.

A collection section 14 is equipped with a filter (not shown) having a capability for collecting the particulates in exhaust gas and an oxidation catalyst (not shown) disposed in a section upstream of the filter. The catalyst transforms NO in the exhaust gas into NO₂. It is to be noted that an oxidation catalyst may be disposed in the filter. A differential pressure sensor 16 that detects the pressure difference across the filter, and a temperature sensor 18 that detects the temperature of the exhaust gas across the filter are connected to the collection section 14. The differential pressure sensor 16 constitutes a detection section in the present invention. The injection amount adjustment section 20 includes a fuel pump 22, an accelerator pedal 24 connected to the fuel pump 22, and a throttle opening adjustment mechanism 26. The throttle opening adjustment mechanism 26 is capable of adjusting the throttle opening degree (the amount of fuel injection) irrespective of operation of the accelerator pedal 24. It is to be noted that throttle opening degree means the opening of the throttle lever (the opening angle of the accelerator lever) related to the adjustment of the amount of fuel injection, which throttle lever is disposed in the fuel pump 22. Further, the fuel pump 22 is equipped with an injection timing adjustment mechanism 28 that is capable of adjusting the timing of fuel injection. The engine load adjustment section 30 is equipped with a hydraulic pump 32 driven by the diesel engine 10 and a hydraulic pressure adjustment mechanism 34 that is capable of adjusting the hydraulic pressure of the hydraulic pump 32.
The hydraulic pressure adjustment mechanism 34 is a restriction valve disposed in the hydraulic circuit, such as a relief valve for a tilt cylinder in a forklift, for example. The hydraulic pressure adjustment mechanism 34 restricts the amount of the oil running through the hydraulic circuit as necessary to control the hydraulic pressure of the exhaust side of the hydraulic pump at the discharge side of the hydraulic pump 32. The load on the engine 10 that drives the hydraulic pump 32 increases in accordance with the increase of the hydraulic pressure of the hydraulic pump 32. In an industrial vehicle like a forklift, the engine load adjustment section 30 is more rationally constituted by using the hydraulic pump 32 as constituting a mechanism for loading and the like, and the hydraulic pressure adjustment mechanism 34, both as, the engine load adjustment section 30. The air intake restriction adjustment section 40 is equipped with an air intake restriction valve 44 in the air intake passage 42. When the air intake restriction valve 44 is adjusted in the direction for restriction, the amount of air taken into the engine 10 decreases, thereby raising the temperature of the exhaust gas. The control section 50 is electrically connected with the engine speed sensor 11, the differential pressure sensor 16, the temperature sensor 18, the fuel pump 22, the throttle opening adjustment mechanism 26, the injection timing adjustment mechanism 28, an ignition key 60, a reprocessing start key 62, and a warning lamp 64. The control section 50 is constituted of an electronic control section (ECU).

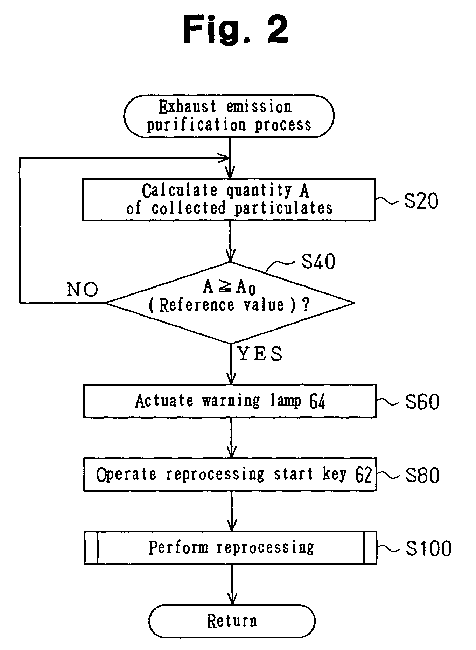

Next, the effect of the purifying process on the exhaust gas emitted from the diesel engine 10 using the exhaust emission purifying apparatus 100 of the constitution is explained, referring to Figs. 2 to 5.

In this embodiment, when, for example, the particulates that have not been processed by continuous reprocessing by an oxidation catalyst accumulate at the collection section 14, back-up processing of the collection section 14 is performed by the exhaust emission purifying process shown in the flowchart of Fig. 2.

As shown in Fig. 2, first, in step S20, the control section 50 computes the amount A of the collected particulates accumulating at the collection section 14. The amount A of collected particulates is computed on the basis of the differential pressure at the collection section 14 detected by the differential pressure sensor 16 and other information representing a variety of states of operation of a diesel engine. In the next step S40, the control section 50 compares the amount A of collected particulates computed in step S20 to the threshold value A₀. If the result of comparison in step S40 is YES, that is, when the amount A of the collected particulates has achieved the threshold value A₀, back-up reprocessing is determined to be necessary, and the process proceeds to step S60. On the other hand, when the result of comparison in step S40 is NO, that is, if the amount A of collected particulates has not achieved the threshold value A₀, back-up reprocessing is not determined to be necessary yet and the process goes back to step S20.

In step S60, the control section 50 actuates a warning lamp 64 (the light remains ON or blinks). Thus, an operator judges that it is necessary to perform back-up reprocessing and stops the forklift and then operates a reprocessing start key 62 (step S80). By this operation, reprocessing in step S100 is started. In this reprocessing, in order to combust the particulates accumulated at the collection section 14, the control section 50 controls the temperature adjustment mechanism such that the temperature of the exhaust gas actuating the collection section 14 may be a target temperature corresponding to the combustion temperature of the particulates. The target temperature includes the same temperature as the combustion temperature of the particulates and a temperature equal to or higher than the combustion temperature of the particulates. It is to be noted that the target temperature, in this embodiment, is set to a temperature equal to or higher than the combustion temperature. The collected particulates are combusted because the temperature of the exhaust gas becomes equal to or higher than the combustion temperature of the particulates, enabling a compulsory back-up reprocessing of the collection section 14.

The temperature adjustment mechanism that adjusts the temperature of the exhaust gas includes, in this embodiment, the injection amount adjustment section 20, the engine load adjustment section 30, and the air intake restriction adjustment section 40. The control of the temperature adjustment mechanism is preferably started on the condition that an operator has operated the operation key. For instance, in the case where it is necessary to perform reprocessing, reprocessing of the collection section 14 is started after the operator stops the vehicle and thereafter operates the operation key.

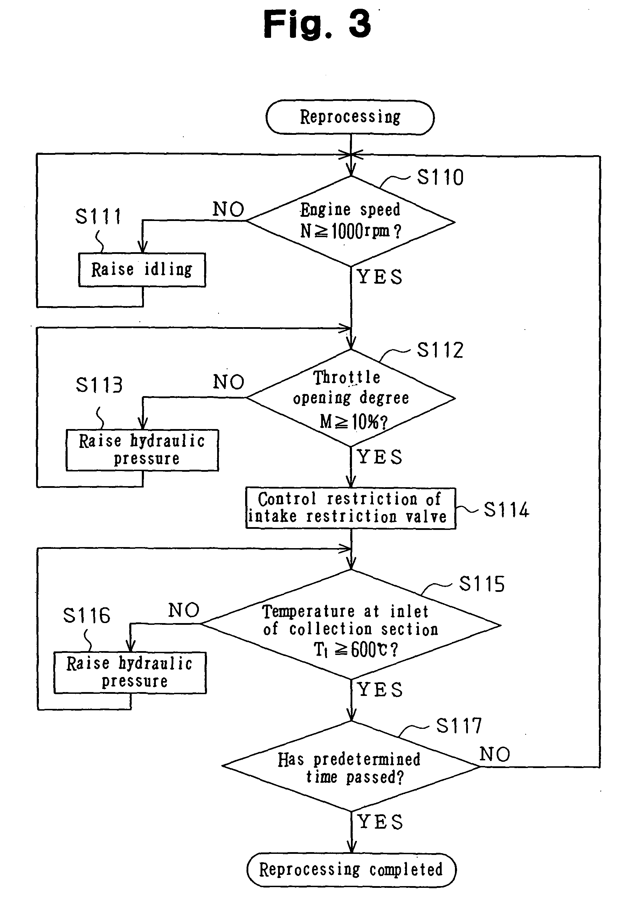

Reprocessing in step S100 shown in Fig. 2 is performed in accordance with the flowchart shown in Fig. 3. As shown in Fig. 3, in step S110 firstly, the control section 50 compares the engine speed N detected by the engine speed sensor 11 with a first reference value (e.g. 1,000 rpm). If the result of comparison in step S110 is YES, that is, if the value of the engine speed N is equal to or greater than the first reference value, the process proceeds to step S112. On the other hand, if the result of comparison in step S110 is NO, that is, if the engine speed N is less than the first reference value, the process proceeds to step S111. In step S111, the control section 50 increases the throttle opening degree by the throttle opening adjustment mechanism 26, thereby increasing idle speed. Then, the processes of steps S110 and S111 are performed repeatedly until the value of the engine speed N becomes equal to or greater than the first reference value.

In step S112, the control section 50 detects the throttle opening degree M and compares the detected value with a second reference value (e.g. 10 %). If the result of comparison in step S112 is YES, that is, if the value of the throttle opening degree M is equal to or greater than the second reference value, the process proceeds to step S114. On the other hand, if the result of comparison in step S112 is NO, that is, if the value of the throttle opening degree M is less than the second reference value, the process proceeds to step S113. In step S113, the control section 50 controls the hydraulic pressure adjustment mechanism 34 such that the hydraulic pressure at the hydraulic pump 32 increases. Then, the processes of step S112 and step S113 are performed repeatedly until the value of the throttle opening degree M becomes greater than the second reference value.

As the requisite condition to raise the temperature of the exhaust gas emitted from the engine up to 600°C or higher as a target temperature, the respective minimum values of the engine speed N and the throttle opening degree M exist. In this embodiment, the value of the engine speed N is 1000 rpm, which is the first reference value, and the value of the throttle opening degree M is 10%, which is the second reference value. These values can be obtained on an experimental basis. In steps S110 to 113, the control section 50 controls the diesel engine 10 such that the requisite conditions may be satisfied.

In step S114, the control section 50 performs restriction control of the air intake restriction valve 44 of the air intake restriction adjustment section 40. A series of the control mentioned above are performed for the purpose of raising the inlet temperature T₁ of the collection section 14 to a temperature equal to or higher than the combustion temperature of the particulates (e.g. 600°C). The restriction degree of the air intake restriction valve 44 is suitably controlled depending on the state of operation of an engine, using a map and the like prepared previously.

In step S115, the control section 50 compares the inlet temperature T₁ of the collection section 14 with the combustion temperature of the particulates. When the result of comparison in step S115 is NO, that is, if the value of the inlet temperature T₁ is lower than the combustion temperature, the process proceeds to step S116. In step S116, a control section 50 controls the hydraulic pressure adjustment mechanism 34 such that the hydraulic pressure at the hydraulic pump 32 increases. The processes of step S115 and step S116 are performed repeatedly until the inlet temperature T₁ becomes equal to or higher than the combustion temperature. That is, the control section 50 increases the hydraulic pressure of the hydraulic pump 32 in order to increase the engine load and also increases the amount of fuel injection in accordance with the increase of the engine load.

On the other hand, when the result of comparison in step S115 is YES, that is, if the value of said inlet temperature T₁ becomes equal to or greater than the combustion temperature, the process proceeds to step S117. In step S117, the control section 50 judges whether a predetermined time has passed or not since the time the inlet temperature T₁ has become equal to or higher than the combustion temperature. If the result of the determination in step S117 is NO, that is, if a predetermined time has not passed, the process goes back to step S110. On the other hand, if the result of the determination in step S117 is YES, that is, if a predetermined time has passed, the control section 50 completes the reprocessing.

This embodiment has the advantages as mentioned below.

The control section 50 controls the respective values of the engine speed and the amount of fuel injection such that they become equal to or greater than the corresponding reference values set as the requisite condition to raise the temperature of the exhaust gas to a predetermined target value (in this embodiment, 600°C or higher). Then, the control section 50 restricts the amount of air intake of the engine 10 by controlling the air intake restriction valve 44 in order to raise the temperature of the exhaust gas. And finally, because the control section 50 controls the engine load and the amount of fuel injection such that the temperature of the exhaust gas may become equal to or higher than the predetermined value, the portion the temperature is to be raised, that is, the portion that is short of the exhaust gas temperature, is compensated by the increase in the amount of fuel injection.

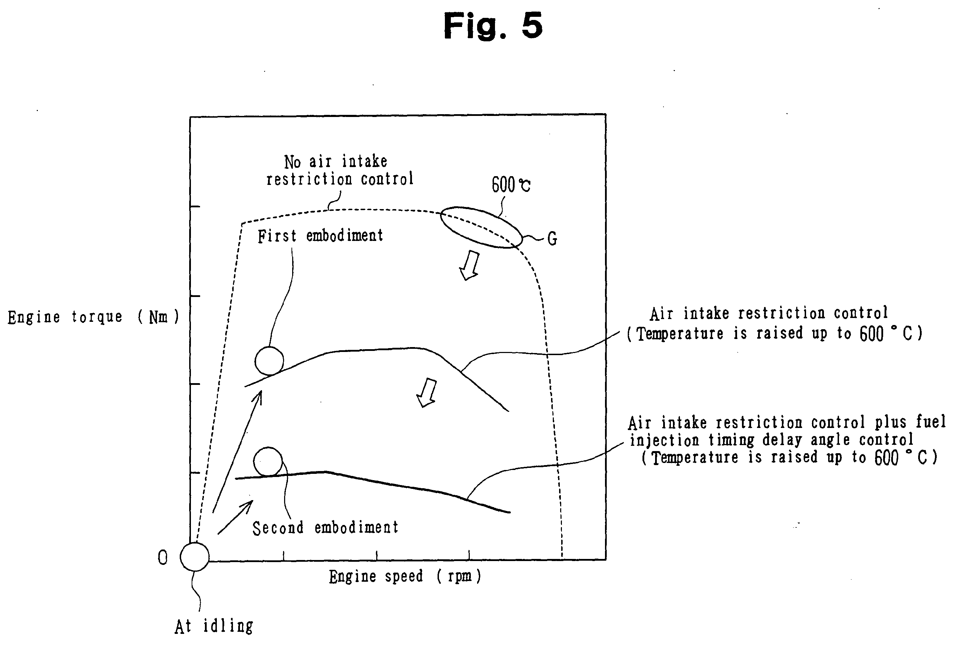

As shown in Fig. 5, in the case where the control as in this embodiment is not used (that is, in the case where the air intake restriction control is not used), unless the engine operating state is set in area G (the area where the engine speed and the engine torque (the engine load) are high) on the broken line in Fig. 5, the inlet temperature T₁ of the collection section 14 cannot be raised as high as 600°C. On the other hand, in this embodiment, the inlet temperature T₁ of the collection section 14 can be raised as high as 600°C even if the engine speed and the engine torque (the engine load) are set low on the narrow line in Fig. 5. In this manner, the fuel consumption in performing reprocessing of the collection section 14 is improved.

In the case of a forklift where a vehicle is often used at a low load and the time of use is short and the frequency of use is small, even when a continuous reprocessing type mechanism using an oxidation catalyst is mounted on the vehicle, sometimes such a mechanism does not effectively work and the particulates accumulate at the collection section 14. However, in the case of this embodiment, because it is capable of combusting the particulates accumulated at the collection section 14 in a relatively short time, the collection section 14 at which the particulates having not been processed by continuous processing accumulated can be reprocessed by back-up processing.

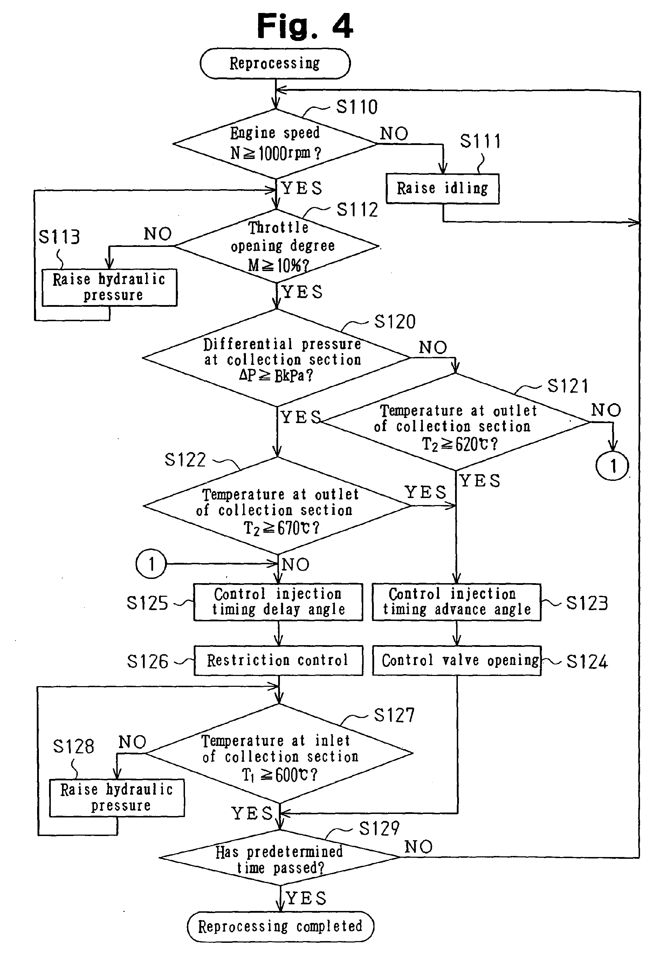

Next, a second embodiment of the present invention is explained in accordance with the flowchart shown in Fig. 4, referring to Figs. 1 to 3. In the reprocessing shown in Fig. 4, steps S110 to S113, the same steps shown in Fig. 3, are performed. When the result of step S112 is YES, that is, if the value of the throttle opening degree M is determined to be equal to or greater than the second reference value, the process proceeds to step S120.

In step S120, the control section 50 detects the differential pressure ΔP at the collection section and compares such detected value with a third reference value BkPa. If the result of step S120 is YES, that is, if such detected differential pressure ΔP is determined to be equal to or less than the third reference value, in other words, if the amount of accumulated particulates at the collection section 14 is less than the predetermined control value, the process proceeds to step S122.

In step S122, the control section 50 detects the outlet temperature T₂ of the collection section 14 and compares such detected value with a fourth reference value, which is a determination temperature (e.g. 670°C). If the result of step S122 is YES, that is, if the value of such outlet temperature T₂ has become equal to or greater than the fourth reference value, the process proceeds to step S123. On the other hand, if the result of step S122 is NO, in other words, the outlet temperature T₂ is less than the fourth reference value, the process proceeds to step S125. That is to say, if the value of the outlet temperature T₂ is relatively high, the process proceeds to step S123, and if the value of the outlet temperature T₂ is relatively low, the process proceeds to step S125.

On the other hand, if the result of step S120 is NO, that is, the value of the differential pressure ΔP is less than the third reference value BkPa, in other words, the value of the amount of the particulates accumulated at the collection section 14 is greater than the control value, the process proceeds to step S121.

In step S121, the control section 50 detects the outlet temperature T₂ of the collection section 14 and compares such detected value with the fifth reference value as the determination temperature (e.g. 620°C). If the result of step S121 is YES, that is, if the value of the outlet temperature T₂ is equal to or greater than the fifth reference value, the process proceeds to step S123. On the other hand, if the result of step S121 is NO, in other words, the value of the outlet temperature T₂ is less than the fifth reference value, the process proceeds to step S125.

It is to be noted that because the temperature excessively rises if the particulates in the collection section 14 accumulate too much, the fifth reference value in step S121 is set preferably to the value lower than the fourth reference value in step S122.

In step S123, the control section 50 performs the advance control that advances the fuel injection timing using the fuel injection timing adjustment mechanism 28. In step S124, the control section 50 performs opening control of the air intake restriction valve 44 and after that, the process proceeds to step S129. The opening control of the air intake restriction valve 44 increases the amount of air supplied to the engine 10 and rising of the temperature of the exhaust gas is restrained, and further, advance control reduces the unburned gas emitted from the engine 10 and restrains the rising of the temperature of the exhaust gas. Accordingly, it is possible to avoid further rising of excessively high temperature of the exhaust gas.

In step S125, the control section 50 performs delay angle control that delays the fuel injection timing using the fuel injection timing adjustment mechanism 28. The delay angle control increases the unburned gas to be discharged from the engine, thereby the temperature of the exhaust gas is raised. An oxidation catalyst combusts the unburned gas that is increased by delaying the injection timing more than the usual timing and avoids emission of the exhaust gas to the outside of a vehicle. It is to be noted that, in this case, the delay angle should preferably be set to the effect that the unburned gas be restrained to the extent that the oxidation catalyst does not cause degradation by high temperature. The control section 50 performs the restriction control of the air intake restriction valve 44 in step S126. The restriction control of the air intake restriction valve 44 reduces the amount of air supplied to the engine 10 by the delay control and accelerates the rise of the temperature of the exhaust gas, and further, the delay control increases the unburned gas emitted from the diesel engine 10 and accelerates the rise of the temperature of the exhaust gas. Therefore, the temperature of the exhaust gas, having not reached the target temperature, can be elevated.

Next, in step S127, the control section 50 determines whether the inlet temperature T₁ has reached the combustion temperature of the particulates (e.g. 600°C) or not. When the result of step S127 is YES, that is, if the value of the inlet temperature T₁ has become equal to or higher than the combustion temperature, the process proceeds to step S129. On the other hand, if the result of step S127 is NO, in other words, the value of the inlet temperature T₁ is less than the combustion temperature, the process proceeds to step S128. In step S128, the control section 50 controls the hydraulic pressure adjustment mechanism 34 such that the hydraulic pressure at the hydraulic pump 32 increases. The processes of step S127 and step S128 are performed repeatedly until the inlet temperature T₁ becomes equal to or higher than the combustion temperature.

In step S129, the control section 50 determines whether the predetermined time has passed or not since the time the inlet temperature T₁ has become equal to or higher than the combustion temperature. When the result of step S127 is NO, that is, when the predetermined time has not passed, the process goes back to step S110. On the other hand, when the result of step S129 is YES, in other words, if the predetermined time has passed, the control section 50 completes the reprocessing.

This embodiment has the following advantages.

The control section 50 controls the respective values of the engine speed and the amount of fuel injection such that they become equal to or greater than the corresponding reference values set as the requisite condition to raise the temperature of the exhaust emission gas. Then, the control section 50 performs the air intake restriction of the engine to restrict the amount of air intake of the engine and also raise the temperature of the exhaust gas by delaying the timing of fuel injection. Then, finally, the control section 50 controls the engine load and the amount of fuel injection by adjusting the hydraulic pump 32 such that the temperature of the exhaust gas becomes equal to or higher than the of predetermined value. Thus, the section where the temperature is short of the exhaust gas temperature, is compensated by the increase of the amount of fuel injection.

As shown in Fig. 5, even in the case where the engine speed and the engine torque (engine load) on the thick line in Fig. 5 (the line for the air intake restriction control plus the injection timing delaying angle control (TCV control) line), which corresponds to this embodiment, is far less than the engine speed and the engine torque in the case of the thin line, which shows the embodiment of Fig. 3, the inlet temperature T₁ at the collection section 14 can be raised up to 600°C. Accordingly, further improvement of the fuel consumption in reprocessing the collection section 14 compared to the embodiment of Fig. 3 is achieved.

It is to be noted that the present invention is not limited to the embodiments mentioned above and may also be modified as follows.

On the condition of operation of a forklift where reprocessing is possible, the reprocessing of the present invention may be performed while the forklift is in operation. In addition, when the amount A of collected particulates has reached the threshold value A₀, reprocessing may automatically be started without using a reprocessing start key 62.

Besides, the present invention may be applied to engines other than the industrial vehicles having an exhaust gas purifying apparatus.

As for the engine load adjustment section 30, the construction other than a hydraulic system, for example, a compressor that is driven by an engine may be used.

Further, an oxidation catalyst that converts NO contained in the exhaust gas into NO₂ may be disposed in a section upstream of, or in the area of the filter.

Furthermore, the present invention may be applied not only to a cargo vehicle such as a forklift but also to a variety of construction vehicles. In addition, with regard to an engine for an industrial vehicle, engines other than a diesel engine may be used.

## Claims

1. An exhaust emission purifying apparatus that performs the purification process of exhaust gas emitted from an engine for an industrial vehicle comprising:
a collection section that collects particulates contained in the exhaust gas emitted from the engine;
a detection section that detects information on the amount of the particulates collected at the collection section;
a temperature adjustment mechanism that adjusts the temperature of the exhaust gas, which effects the collection section, to a predetermined temperature corresponding to the combustion temperature of the particulates; and
a control section that controls the temperature adjustment mechanism on the basis of the information detected at the detection section,
wherein the temperature adjustment mechanism is constructed with at least an injection amount adjustment section that adjusts the amount of the fuel injected to the engine, an engine load adjustment section that adjusts the load on the engine, and an air intake restriction adjustment section that performs restriction adjustment of the amount of air intake to the engine.

2. The exhaust emission purifying apparatus according to claim 1, wherein in the case where the amount of the collected particulates is equal to or more than a predetermined threshold value, the control section controls the injection amount adjustment section such that the value of the engine speed becomes equal to or greater than a predetermined first reference value and also controls the engine load adjustment section such that the value of the throttle opening degree becomes equal to or greater than a predetermined second reference value, and further control section controls the air intake restriction adjustment section to restrict the amount of air intake of the engine.

3. The exhaust emission purifying apparatus according to claim 1 or 2, wherein the temperature adjustment mechanism further includes a fuel injection timing adjustment section that adjusts the timing of fuel injection for the engine.

4. The exhaust emission purifying apparatus according to claim 3, wherein in the case where the temperature of the exhaust gas at the outlet of the collection section is even higher than a determination temperature that is higher than the target temperature, the fuel injection timing adjustment mechanism advances the timing of fuel injection.

5. The exhaust emission purifying apparatus according to claim 3, wherein in the case where the temperature of the exhaust gas at the outlet of the collection section is even lower than a determination temperature that is higher than the target temperature, the fuel injection timing adjustment mechanism delays the timing of fuel injection.

6. The exhaust emission purifying apparatus according to any one of claims 1 to 5, wherein the engine load adjustment section includes a hydraulic pump driven by the engine and a hydraulic pressure adjustment mechanism that is connected to the hydraulic pump and adjusts the hydraulic pressure.

7. A method for performing purification process of exhaust gas emitted from an engine for an industrial vehicle, wherein the method comprising:
a step of collecting particulates in the exhaust gas emitted from the engine,
a step of detecting information on the amount of the collected particulates, and
a step of controlling the amount fuel injected to the engine, an engine load, and the amount of air intake to the engine based on the detected information, thereby setting the temperature of the exhaust gas, which affects the collected particulates, to a predetermined target temperature corresponding to the combustion temperature of the same particulates.

8. The method according to claim 7, wherein the step of setting the temperature of the exhaust gas to a predetermined target temperature corresponding to the combustion temperature of the particulates includes:
a step of controlling the engine speed and the amount of fuel injection to values equal to or greater than predetermined values set as the minimum;
a step of raising the temperature of the exhaust gas by controlling the air intake restriction of the engine; and
a step of controlling the engine load and the amount of fuel injection such that the temperature of the exhaust gas becomes equal to or higher than the target temperature.

9. The method according to claim 7, wherein the step of setting the temperature of the exhaust gas to a predetermined target temperature corresponding to the combustion temperature of the particulates includes:
a step of controlling the engine speed and the amount of fuel injection to values equal to or greater than predetermined value set as the minimum;
a step of raising the temperature of the exhaust gas by controlling the air intake restriction of the engine and the timing of fuel injection; and
a step of controlling the engine load and the amount of fuel injection such that the temperature of the exhaust gas becomes equal to or higher than the target temperature.

10. The method according to claim 9, wherein the fuel injection timing is advanced in the case where the temperature of the exhaust gas at the outlet of the collection section is higher than a determination temperature that is higher than the target temperature.

11. The method according to claim 9, wherein the fuel injection timing is delayed in the case where the temperature of the exhaust gas at the outlet of the collection section is lower than a determination temperature that is higher than the predetermined temperature.
